(19) Europäisches Patentamt
European Patent Office
Office européen des brevets

(11) Veröffentlichungsnummer: **0 399 292 A1**

# (12) EUROPÄISCHE PATENTANMELDUNG

(21) Anmeldenummer: **90108777.5**

(22) Anmeldetag: **10.05.90**

(51) Int. Cl.⁵: **C09B 62/085, C09B 62/51**

(30) Priorität: **23.05.89 DE 3916661**

(43) Veröffentlichungstag der Anmeldung: **28.11.90 Patentblatt 90/48**

(84) Benannte Vertragsstaaten: **CH DE FR GB LI**

(71) Anmelder: **BAYER AG**
**D-5090 Leverkusen 1 Bayerwerk(DE)**

(72) Erfinder: **Jäger, Horst, Dr.**
**Carl-Rumpff-Strasse 37**
**D-5090 Leverkusen 1(DE)**
Erfinder: **Alt, Dieter, Prof. Dr.**
**Rybniker Strasse 2**
**D-5000 Koeln 80(DE)**

## (54) Reaktivfarbstoffe.

(57) Farbstoffe der Formel (1)

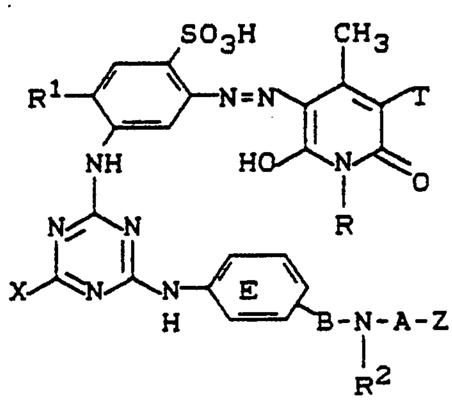

(1)

mit den in der Beschreibung genannten Substituentenbedeutungen eignen sich hervorragend für das Färben und Bedrucken von hydroxyl- und amidgruppenhaltigen Materialien. Sie liefern licht- und naßechte Färbungen hoher Brillianz.

EP 0 399 292 A1

## Reaktivfarbstoffe

Gegenstand der Erfindung sind Reaktivfarbstoffe der allgemeinen Formel (1)

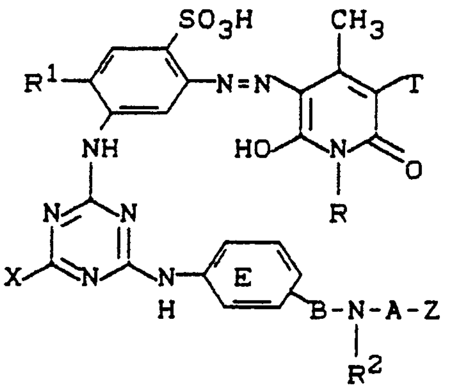

(1)

worin

X = Cl oder F, gegebenenfalls substituierter Pyridinium-Rest (Substituenten insbesondere gegebenenfalls $C_1$-$C_4$-Alkyl, COOH, $SO_3H$, CN, Carbonamid)

R = H oder gegebenenfalls substituiertes $C_1$-$C_4$-Alkyl,

$R^1$ = H, COOH, $SO_3H$ oder $CH_3$

$R^2$ = H oder gegebenenfalls substituiertes $C_1$-$C_4$-Alkyl,

B = Brückenglied, insbesondere CO, $SO_2$ oder NHCO,

A = gegebenenfalls substituiertes Phenylen- oder Naphthylen,

Z = $SO_2CH=CH_2$ oder $SO_2CH_2CH_2$-Y, wobei Y eine unter alkalischen Bedingungen abspaltbare Gruppe bedeutet und der Benzolring E substituiert sein kann,

T = H, $SO_3H$, $CH_2SO_3H$, $CONH_2$, Cl.

Beispiele für Substituenten der Phenylen- oder Naphthylen-reste A sind $CH_3$, $C_2H_5$, $OCH_3$, $OC_2H_5$, Cl, Br, COOH, $SO_3H$ und OH.

Folgende Reste A seien genannt:

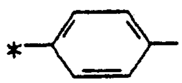 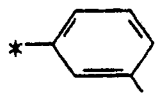 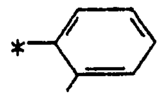 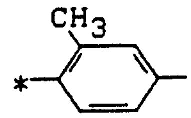

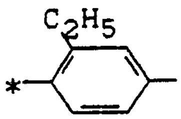 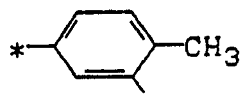 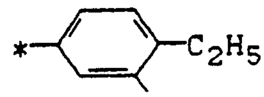

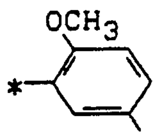 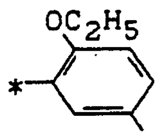 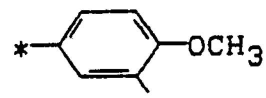

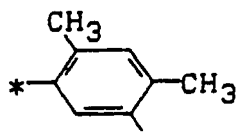 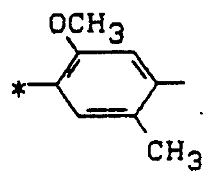 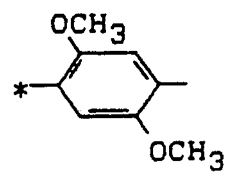

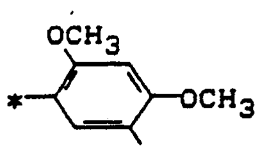 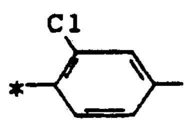 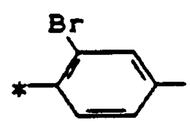 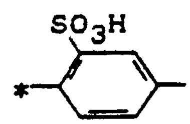

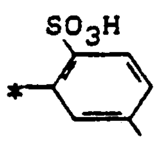 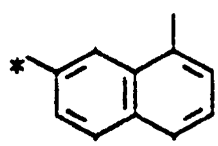 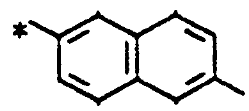

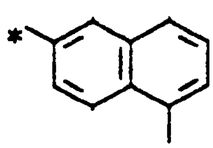 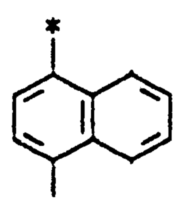 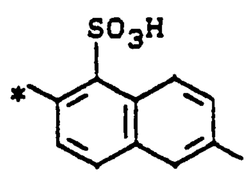

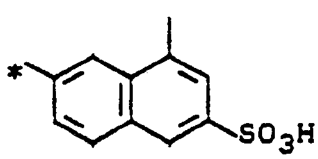 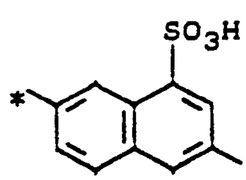

In den Formeln ist die mit einem Stern gekennzeichnete Bindung an

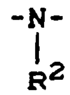

geknüpft.

Als Substituenten der $C_1$-$C_4$-Alkylreste R bzw. $R^2$ kommen infrage: OH, Cl, CN, $OCH_3$, $OC_2H_5$, COOH, $SO_3H$, $OSO_3H$. Beispiele für R bzw. $R^2$ sind: $CH_3$, $C_2H_5$, $CH_2CH_2CN$, $CH_2CH_2OH$, $CH_2CO_2OSO_3H$, $CH_2CH_2SO_3H$, $CH_2COOH$, $CH_2CH_2COOH$ , n-$C_3H_7$, iso-$C_3H_7$, n-$C_4H_9$, t-$C_4H_9$,

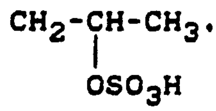

Abspaltbare Gruppen Y sind beispielsweise: $OSO_3H$, $OSO_3H_2$, $S_2O_3H$, Cl, $OCOCH_3$.

Beispiele für Substituenten von E sind:

Cl, $CH_3$, $OCH_3$, COOH.

Im Rahmen der Formel (1) sind folgende Farbstoffe bevorzugt:

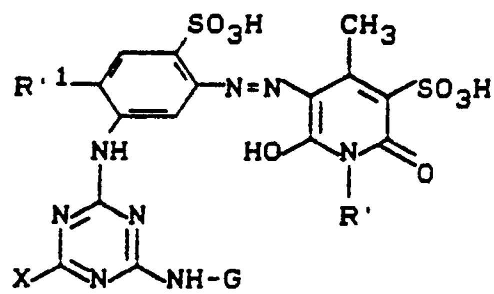

(2)

worin R' = $CH_3$ oder $C_2H_5$ und R'$^1$ = H oder $SO_3H$

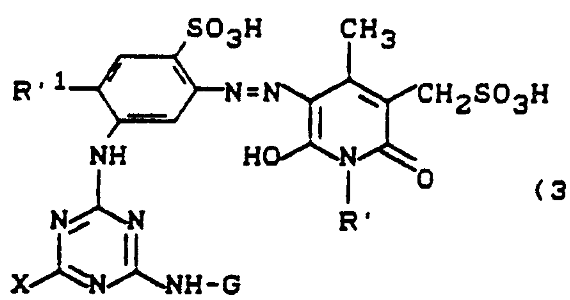

(3)

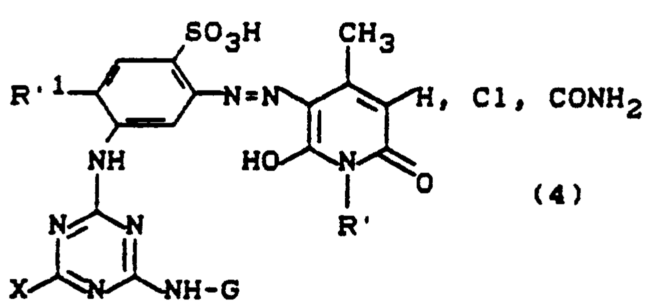

(4)

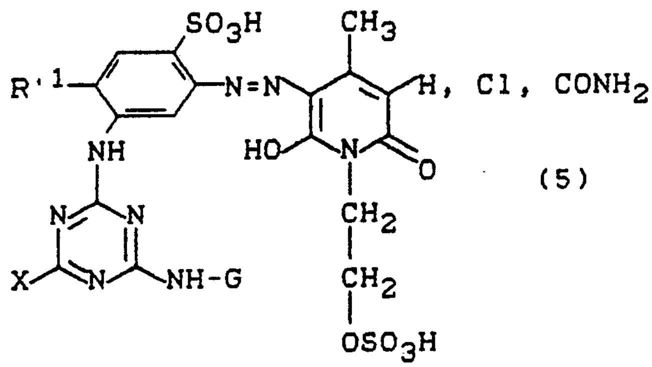

(5)

Eine weitere wichtige Untergruppe stellen Farbstoffe der Formeln (1) bis (5) dar, in denen X = F. In den Formeln (2) bis (5) steht G für

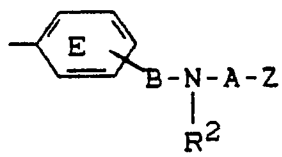

Bevorzugt sind weiterhin Farbstoffe der Formel (2), in denen
$R'^{1}$ = H
X = Cl
G = $G'$, worin $G'$ für

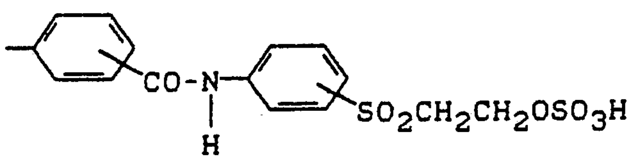

steht,
der Formel (2), in denen
$R'^{1}$ = H
X = F
G = $G'$
der Formel (3), in denen
$R'^{1}$ = H
X = Cl
G = G
der Formel (3), in denen
$R'^{1}$ = H
X = F
G = $G'$
der Formel (4), in denen
$R'^{1}$ = $SO_3H$
X = Cl
G = $G'$
der Formel (4), in denen
$R'^{1}$ = $SO_3H$
X = F
G = $G'$
der Formel (5), in denen
$R'^{1}$ = H

X = Cl
G = G′
der Formel (5), in denen
$R'^1$ = H
X = F
G = G′

Gegenstand der Erfindung sind weiterhin Verfahren zur Herstellung von Farbstoffen (1). Folgende seien genannt:

1. Azofarbstoffe der Formel

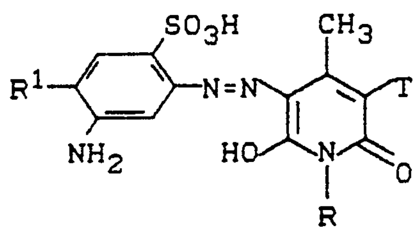
(6)

werden mit Cyanurchlorid oder Cyanurfluorid unter Abspaltung von HCl bzw. HF zu Farbstoffen der Formel

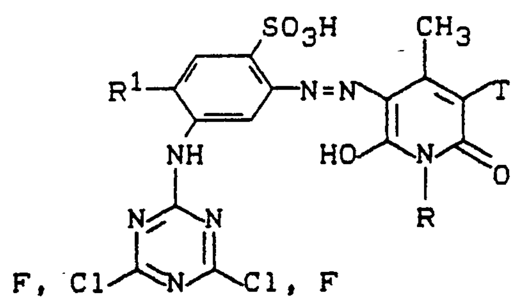
(7)

umgesetzt,
die dann mit einem Amin der Formel

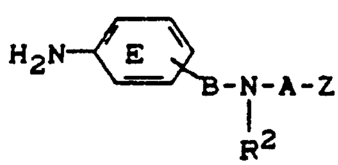
(8)

unter Abspaltung von HCl bzw. HF zu einem Farbstoff (1) kondensiert werden.

2. Ein Amin der Formel (8) wird mit Cyanurchlorid oder Cyanurfluorid unter Abspaltung von HCl bzw. HF zu einer Verbindung der Formel

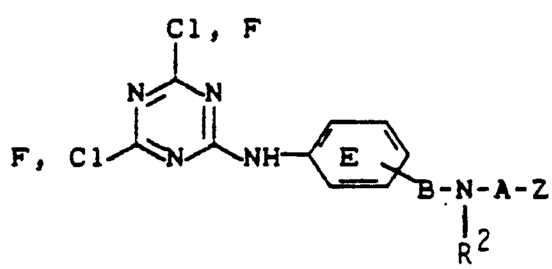
(9)

kondensiert, die dann mit einem Farbstoff (6) unter Abspaltung von HCl bzw. HF zu einem Farbstoff (1)

kondensiert wird.

3. Ein Diamin der Formel

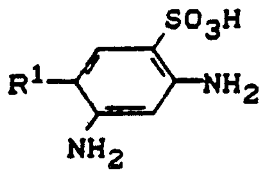

(10)

wird zunächst selektiv mit Cyanurchlorid oder Cyanurfluorid, unter Abspaltung von HCl bzw. HF zu einem Monoamin der Formel

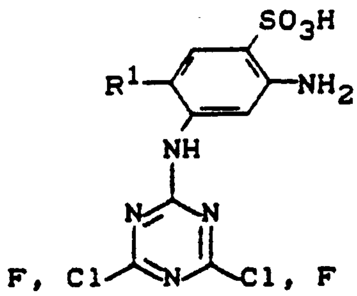

(11)

kondensiert, das dann unter üblichen Bedingungen diazotiert und mit einer Pyridon-Kupplungskomponente der Formel

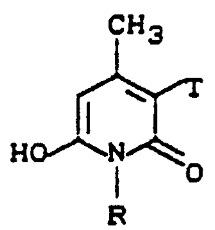

(12)

zu einem Farbstoff der Formel

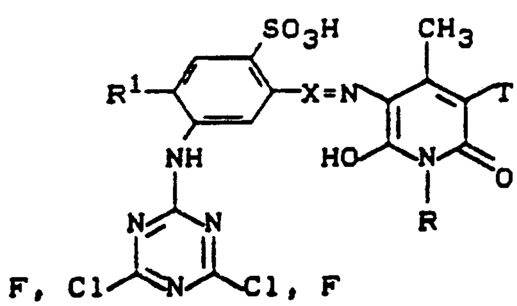

(7)

vereinigt wird, der dann mit einem Amin (8) unter Abspaltung von HCl bzw. HF zu einem Farbstoff (1) umgesetzt wird.

4. Eine Dichlor- bzw. Difluortriazinverbindung (9) wird mit einem Diamin (10) zu einem Monoamin

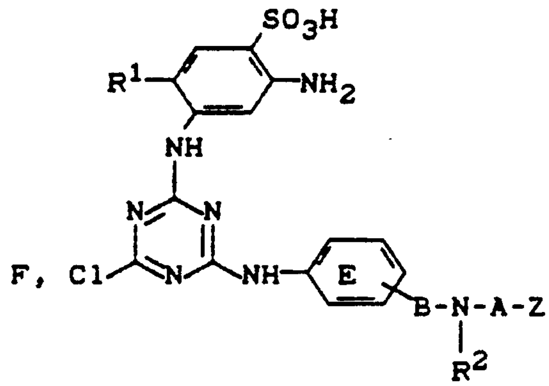

(13)

unter Abspaltung von HCl bzw. HF kondensiert, das dann nach üblichen Bedingungen diazotiert und mit einer Kupplungskomponente (12) zu einem Farbstoff (1) vereinigt wird.

Farbstoffe (6) erhält man durch Kuppeln von diazotierten Aminen der Formel

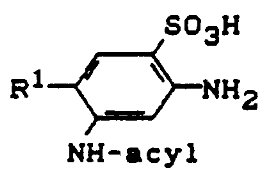

(14)

(acyl vorzugsweise = Acetyl)

mit den Kupplungskomponenten (12) im schwach sauren bis neutralen wäßrigen Medium und Abspaltung des Acylrestes durch Erhitzen mit Säuren.

Die Kondensation von (6), (8) oder (10) mit Cyanurchlorid bzw. Cyanurfluorid wird im allgemeinen in wäßriger Phase bei 0 bis 20° C und im schwach sauren bis neutralen pH-Bereich durchgeführt.

Die bei der Kondensation freiwerdende Salzsäure bzw. Flußsäure wird vorzugsweise durch Zugabe von Alkali-oder Erdalkalihydroxiden, -carbonaten, -hydrogencarbonaten oder -phosphaten abgefangen.

Die Kondensation der Dichlor- bzw. Difluorverbindungen (7) oder (9) mit den Verbindungen (8), (6) oder (10), wobei die Kombinationen (7) und (8), (9) und (6) und (9) und (10) zu berücksichtigen sind, wird vorzugsweise gleichfalls in wäßriger Phase bei 0 bis 50° C und im schwach sauren bis neutralen pH-Bereich ausgeführt, wobei vorzugsweise die freiwerdende Salzsäure oder Flußsäure mit den oben genannten Basen abgefangen wird.

Die Umsetzungstemperatur für Cyanurfluorid bzw. Difluortriazine (7), (9) und (11) liegt dabei im allgemeinen niedriger als die mit den entsprechenden Chlortriazinen.

Beispiele für Kupplungskomponenten (12) der Pyridonreihe sind folgende:

1-N-Methyl-2-hydroxy-4-methyl-5-sulfo-pyridon-6,
1-N-Ethyl-2-hydroxy-4-methyl-5-sulfo-pyridon-6,
1-N-Methyl-2-hydroxy-4-methyl-5-sulfomethyl-pyridon-6,
1-N-Ethyl-2-hydroxy-4-methyl-5-sulfomethyl-pyridon-6,
1-N-Methyl-2-hydroxy-4-methyl-5-carbonamido-pyridon-6,
1-N-Ethyl-2-hydroxy-4-methyl-5-carbonamido-pyridon-6,
1-N-β-Sulfatoethyl-2-hydroxy-4-methyl-5-carbonamido-pyridon-6,
1-N-β-Sulfatoethyl-2-hydroxy-4-methyl-pyridon-6,
1-N-β-Sulfoethyl-2-hydroxy-4-methyl-pyridon-6,
1-N-Methyl-2-hydroxy-4-methyl-pyridon-6.

Beispiele für Diamine (10) sind folgende:

1,3-Diamino-4-sulfo-benzol,
1,3-Diamino-4,6-disulfo-benzol,
1,3-Diamino-4-sulfo-6-methyl-benzol,
1,3-Diamino-4-sulfo-6-carboxy-benzol.

Die eine (8) mit B = CO oder $SO_2$ erhält man nach bekannten Verfahren, beispielsweise durch Acylierung von Aminen der Formel

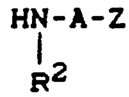

(15)

mit den Nitroverbindungen der Formel

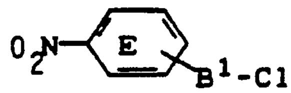

(16)

worin $B^1$ = CO oder $SO_2$
zu den Kondensationsprodukten der Formel

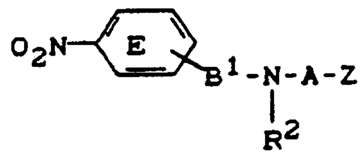

(17)

aus denen dann nach Reduktion der Nitrogruppe beispielsweise mit katalytisch erregten Wasserstoff Amine (8) erhalten werden.

Eine weitere Variante zur Herstellung von Aminen (8) mit B = CO oder $SO_2$ besteht darin, daß man zunächst von Aminen der Formel

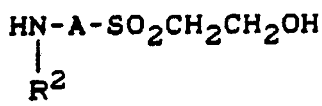

(18)

ausgeht und diese durch Acylierung mit den Säurechloriden (16) oder Verbindungen der Formel

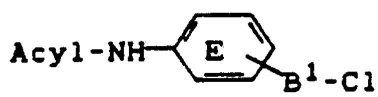

(19)

kondensiert und daraus durch Reduktion der Nitrogruppe oder Verseifen des Acylrestes (vorzugsweise Acetyl), Amine der Formel

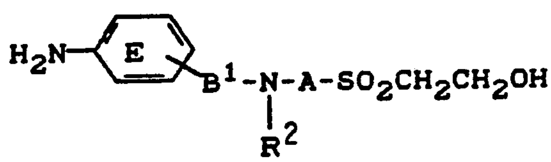

(20)

herstellt.

Diese können gleichfalls nach bekannten Verfahren - zum Beispiel Sulfatierung durch Eintragen in konz. Schwefelsäure - in Amine der Formel

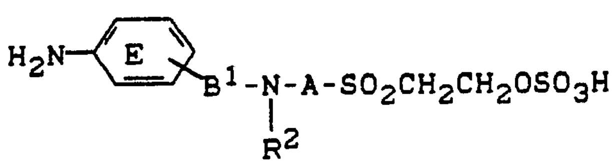

(21)

überführt werden.

Amine (8) mit B = CO und E substituiert durch COOH erhält man durch Kondensation von Aminen (15) mit 4-Nitrophthalsäureanhydrid und anschließender Reduktion der Nitrogruppe. Amine (8) mit B = NHCO erhält man durch Umsetzung von Nitrophenylisocyanaten der Formel

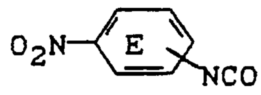 (22)

mit den Aminen (15) und anschließender Reduktion der Nitrogruppe.

Beispiele für Säurechloride (12) sind:
2-, 3- oder 4-Nitrobenzoylchlorid,
2-, 3- oder 4-Nitrobenzolsulfochlorid,
5-Nitro-2-methyl- oder -2-chlor- oder -2-methoxybenzoylchlorid,
5-Nitro-2-methyl- oder -2-chlor- oder -2-methoxybenzoylchlorid.

Beispiele für Säurechloride (19) sind:
4-Acetylamino-benzolsulfochlorid,
3-Acetylamino-benzoylchlorid.

Beispiele für Isocyanate (22) sind:
4-Nitrophenylisocyanat,
3-Nitrophenylisocyanat.

Beispiele für Amine (15) sind:
1-Aminobenzol-2-, -3- oder -4-β-sulfatoäthylsulfon,
1-Aminobenzol-3-β-phosphatoäthylsulfon,
1-Amino-4-methyl-benzol-3-β-sulfatoäthylsulfon,
1-Aminobenzol-3-β-chloräthylsulfon,
1-Amino-4-methoxybenzol-3-β-sulfatoäthylsulfon,
1-Aminobenzol-4-β-sulfatoäthylsulfon-2-sulfonsäure,
1-Aminobenzol-5-β-sulfatoäthylsulfon-2-sulfonsäure,
1-Aminobenzol-5-β-sulfatoäthylsulfon-2,4-disulfonsäure,
1-Aminonaphthalin-4-β-sulfatoäthylsulfon,
1-Amino-2,5-dimethoxybenzol-4-β-sulfatoäthylsulfon,
1-Aminobenzol-4-β-sulfatoäthylsulfon-2-carbonsäure,
1-Aminobenzol-5-β-sulfatoäthylsulfon-2-carbonsäure,
1-Amino-2-methoxybenzol-4-β-sulfatoäthylsulfon,
1-Amino-2-chlorbenzol-4-β-sulfatoäthylsulfon,
1-Amino-2-methoxybenzol-5-β-sulfatoäthylsulfon,
2-Aminonaphthalin-8-β-sulfatoäthylsulfon,
2-Aminonaphthalin-8-β-sulfatoäthylsulfon-6-sulfonsäure,
1-Amino-2,5-dimethoxybenzol-4-vinylsulfon,
1-Amino-2-methoxy-5-methylbenzol-4-β-sulatoäthylsulfon,
1-Amino-2,5-diäthoxybenzol-4-β-sulfatoäthylsulfon,
1-Amino-2-brombenzol-4-β-sulfatoäthylsulfon,
1-Amino-2-brombenzol-4-vinylsulfon,
1-Aminobenzol-5-vinylsulfon-2,4-disulfonsäure,
1-Aminobenzol-5-β-phosphatoäthylsulfon-2,4-disulfonsäure,
1-Aminobenzol-5-β-chloräthylsulfon-2,4-disulfonsäure,
2-Aminonaphthalin-8-β-phosphatoäthylsulfon-6-sulfonsäure,
2-Aminonaphthalin-8-vinylsulfon-6-sulfonsäure,
1-Amino-2-methoxy-5-methylbenzol-4-β-chloräthylsulfon,
2-Aminophenol-4-β-sulfatoäthylsulfon,
1-Aminobenzol-3- oder -4-vinylsulfon,
1-Amino-2-hydroxybenzol-4-β-sulfatoäthylsulfon,
1-Aminobenzol-5-vinylsulfon-2-sulfonsäure.

Die neuen Farbstoffe geben auf Cellulose- sowie natürlichen und synthetischen Polyamidmaterialien klare Färbungen. Sie zeichnen sich durch hohe Farbstärke aus.

Als wasserlösliche Reaktivfarbstoffe finden die neuen Farbstoffe bevorzugtes Interesse für das Färben von hydroxyl- und amidgruppenhaltigen Textilmaterialien, insbesondere von Materialien aus nativer und

regenerierter Cellulose sowie synthetischen Polyamid- und Polyurethanfasern, Wolle und Seide.

Die genannten Materialien werden nach den für wasserlösliche Reaktivfarbstoffe allgemein bekannten und in der Technik üblichen Verfahren gefärbt oder bedruckt. Man erhält dann licht- und naßechte brillante Färbungen und Drucke.

Bei den Temperaturangaben in den Beispielen handelt es sich um 0° C. Die Formeln der wasserlöslichen Reaktivfarbstoffe in der Beschreibung und in den Beispielen sind die der freien Säuren. Isoliert und angewandt werden die Farbstoffe im allgemeinen in Form ihrer Alkalisalze, insbesondere der Lithium-, Natrium- oder Kaliumsalze.

Die in den Beispielen angegebenen Farbkennzahlen beziehen sich auf Colour Index Hue Chart (Indicator Numbers).

Beispiel 1

41,8 g des Farbstoffs der Formel

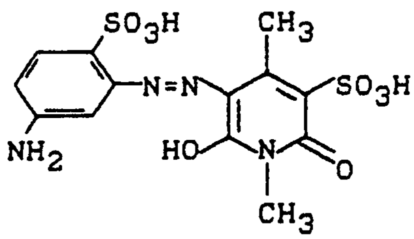

(er wird erhalten durch Diazotieren von 2-Amino-4-acetylamino-benzol-sulfonsäure-1 und Kuppeln bei pH 5 bis 6 auf 1-N-Methyl-2-hydroxy-4-methyl-5-sulfo-pyridon-6 und anschließender Verseifung der Acetylgruppe durch Erhitzen mit Säure) werden in 1 l Wasser neutral gelöst, auf 0° abgekühlt, und mit 18,5 g feingepulvertem Cyanurchlorid versetzt. Die freiwerdende Salzsäure wird mit verdünnter Lithiumhydroxidlösung abgefangen. Wenn sich keine freie Aminogruppe mehr nachweisen läßt, werden 40,0 g 1-(3′-Aminobenzoylamino)-benzol-3-β-sulfatoethylsulfon eingestreut und die Temperatur auf 40° C gebracht, wobei gleichzeitig der pH bei 5,5 bis 6,5 durch Zugabe verdünnter Lithiumhydroxidlösung gehalten wird. Nach beendeter Kondensation wird der Farbstoff ausgesalzen, abgesaugt, getrocknet und gemahlen. Man erhält ein gelbes Farbstoffpulver, das sich leicht in Wasser mit zitronengelber Farbe löst. Der Farbstoff entspricht der Formel

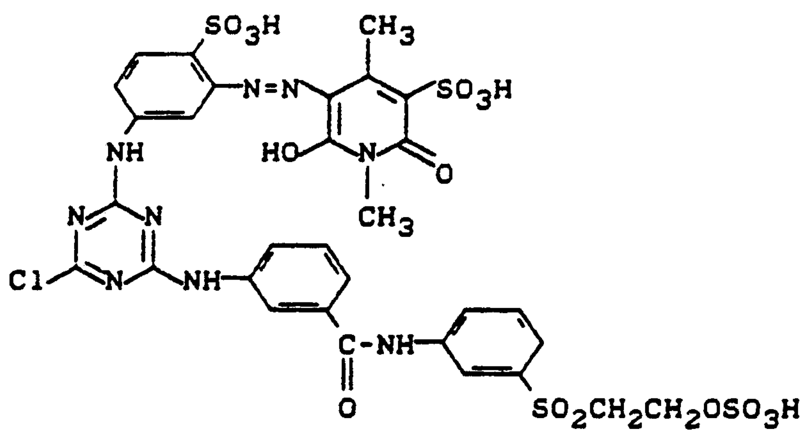

$\lambda_{max}$ = 420

Der Farbstoff färbt Baumwolle nach einem der für Reaktivfarbstoffe üblichen Verfahren in klaren grünstichiggelben Tönen. Farbkennzahl 1.

Beispiel 2

41,8 g des Farbstoffs der Formel

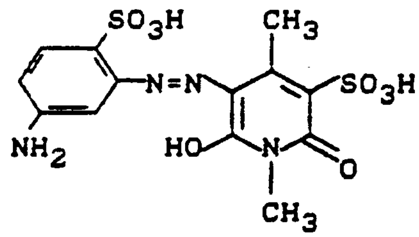

werden in 1 l Eiswasser als gemischtes Li-Na-Salz neutral gelöst und mit 13,5 g Trifluortriazin tropfenweise versetzt, wobei die freiwerdende Flußsäure mit verdünnter Lithiumhydroxidlösung abgefangen wird Man rührt kurz nach und gibt dann 40,0 g 1-(3′-Aminobenzoylamino)-benzol-3-β-sulfatoethylsulfon hinzu. Man läßt die Temperatur dann von 0° auf 10 bis 15° C ansteigen und hält den pH-Wert bei 5.5 bis 6,5.

Nach beendeter Kondensation wird der Farbstoff ausgesalzen, abgesaugt, getrocknet und gemahlen. Der Farbstoff färbt Baumwolle grünstichig gelb. Farbkennzahl 1. Die Struktur des Farbstoffs ist identisch mit der von Beispiel 1 mit Ausnahme des F-Atoms am Triazin.

Nach den Angaben von Beispiel 1 oder 2 erhält man weitere wertvolle Farbstoffe, die Baumwolle grünstichig gelb färben, wenn die nachfolgend aufgeführten Aminoazofarbstoffe und Aminkomponenten verwendet.

azo 1 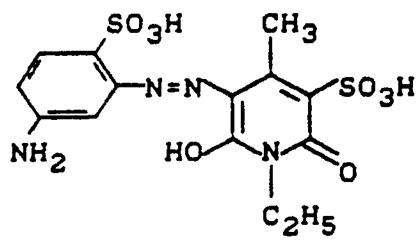

azo 2 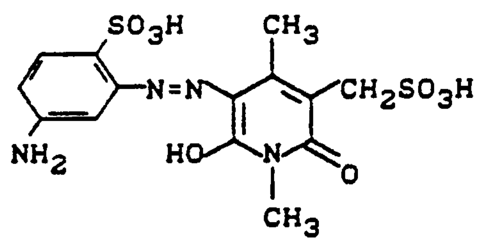

azo 3 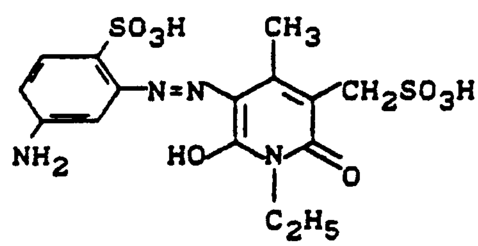

azo 4

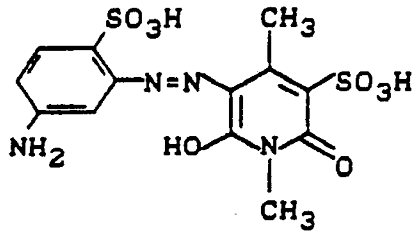

azo 5

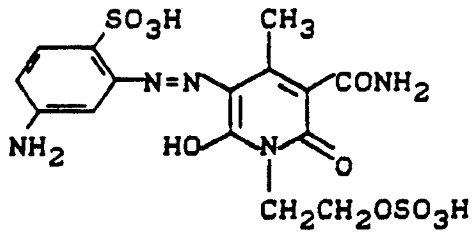

azo 6

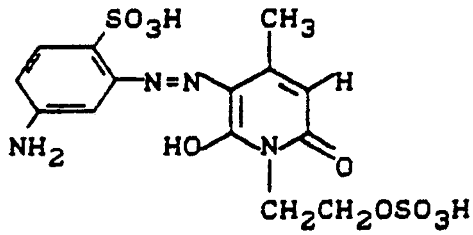

azo 7

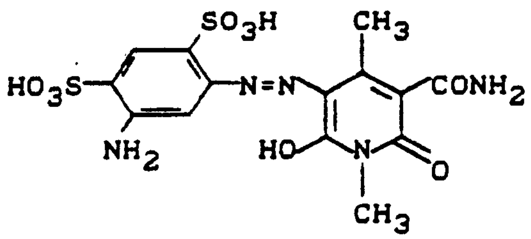

azo 8

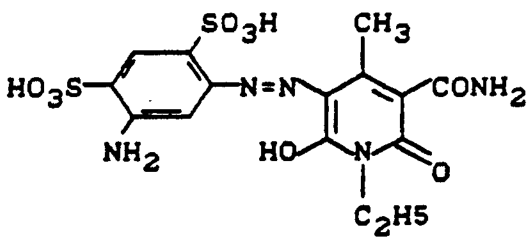

azo 9

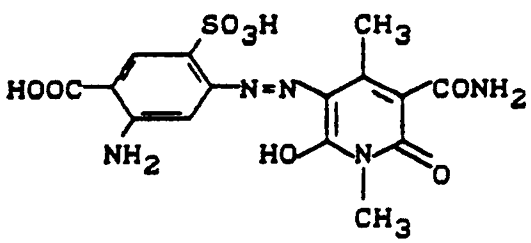

| Beispiel | Aminofarbstoff | Halogen am Triazin | Aminkomponente |
|---|---|---|---|
| 3 | azo 1 | Cl | 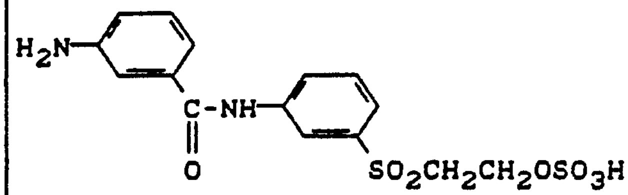 |
| 4 | azo 1 | Cl | 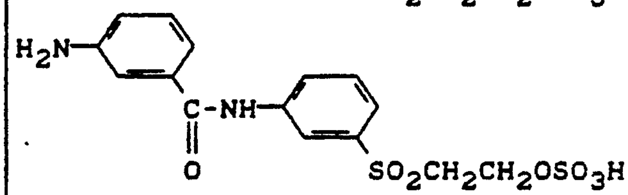 |
| 5 | azo 1 | Cl | 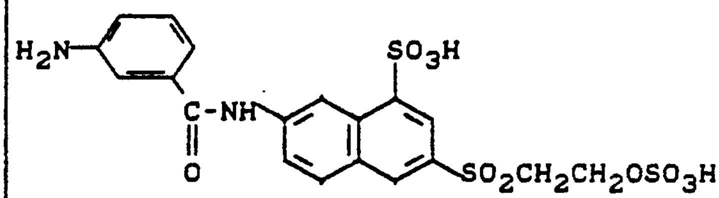 |
| 6 | azo 1 | Cl | 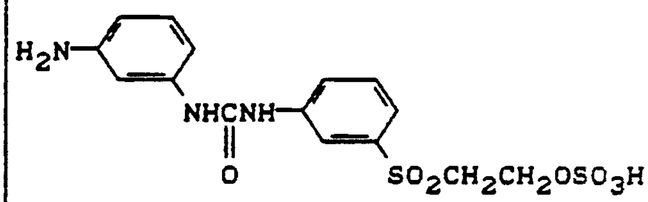 |
| 7 | azo 1 | Cl | 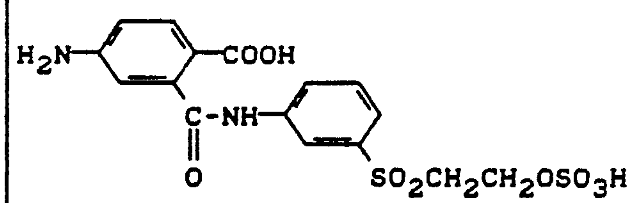 |
| 8 | azo 1 | Cl | 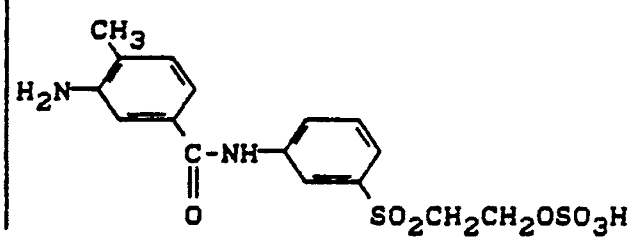 |

| Beispiel | Aminofarbstoff | Halogen am Triazin | Aminkomponente |
|---|---|---|---|
| 9 | azo 1 | Cl | 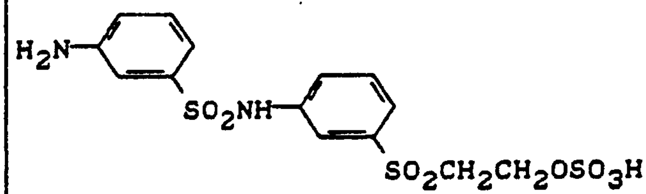 |
| 10 | azo 1 | Cl | 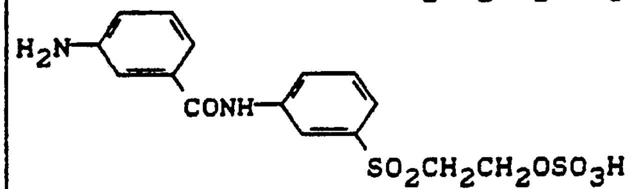 |
| 11 | azo 1 | F | 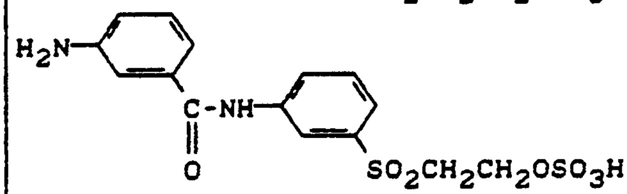 |
| 12 | azo 1 | F | 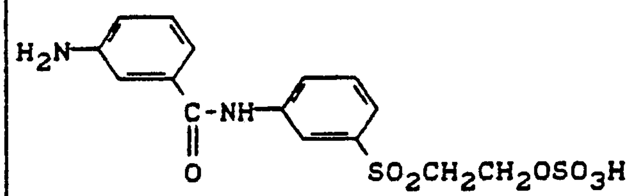 |
| 13 | azo 1 | F | 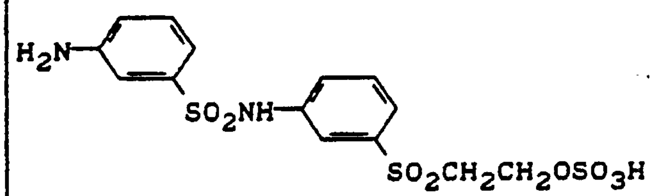 |
| 14 | azo 1 | F | 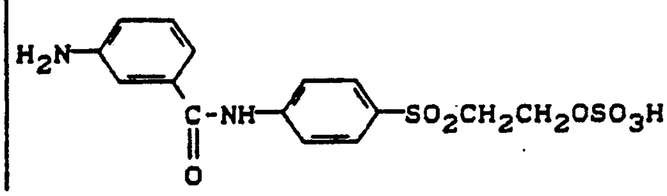 |

| Bei-spiel | Amino-farb-stoff | Halogen am Triazin | Aminkomponente |
|---|---|---|---|
| 15 | azo 1 | F | 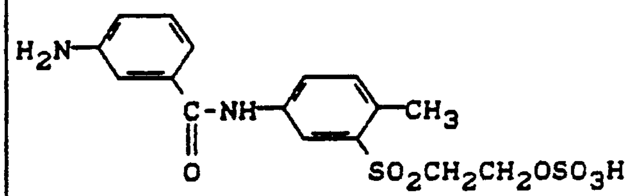 |
| 16 | azo 1 | F | 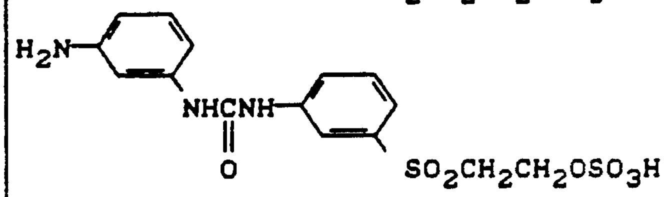 |
| 17 | azo 1 | F | 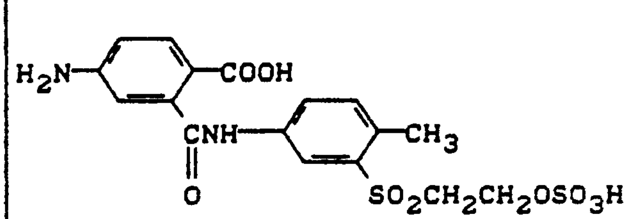 |
| 18 | azo 1 | F | 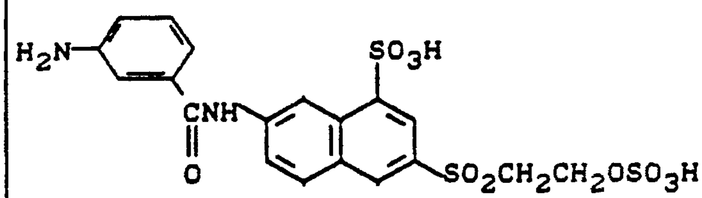 |
| 19 | azo 2 | Cl | 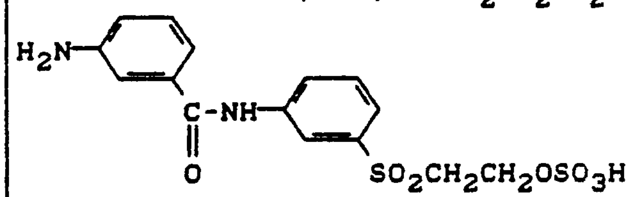 |
| 20 | azo 2 | F | " |
| 21 | azo 2 | Cl | 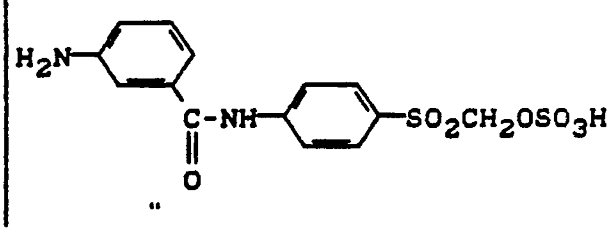 |
| 22 | azo 2 | F | " |

| Beispiel | Aminofarbstoff | Halogen am Triazin | Aminkomponente |
|---|---|---|---|
| 23 | azo 2 | Cl | 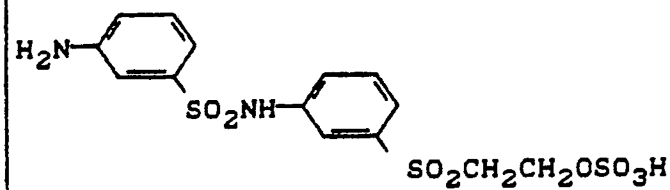 |
| 24 | azo 2 | F | " |
| 25 | azo 2 | Cl | 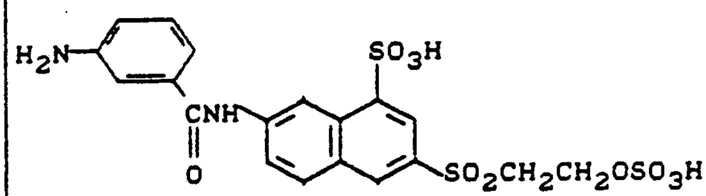 |
| 26 | azo 2 | F | " |
| 27 | azo 3 | Cl | 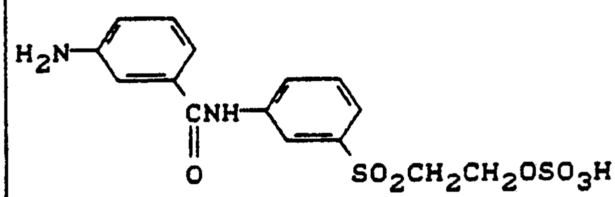 |
| 28 | azo 3 | F | " |
| 29 | azo 3 | Cl | 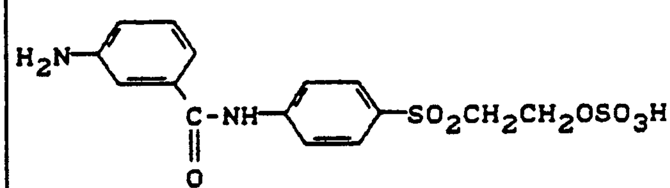 |
| 30 | azo 3 | F | " |

| Beispiel | Aminofarbstoff | Halogen am Triazin | Aminkomponente |
|---|---|---|---|
| 31 | azo 4 | Cl | 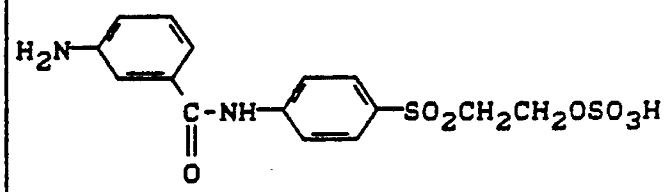 |
| 32 | azo 4 | F | " |
| 33 | azo 4 | Cl | 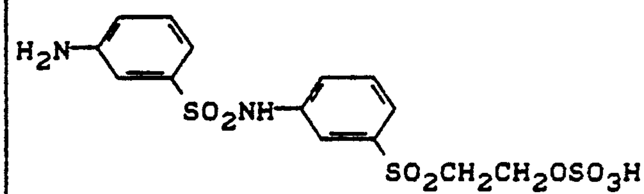 |
| 34 | azo 4 | F | " |
| 35 | azo 4 | Cl | 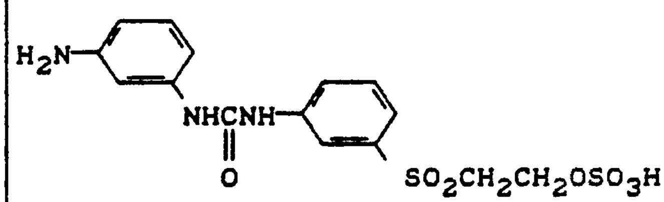 |
| 36 | azo 4 | F | " |
| 37 | azo 4 | Cl | 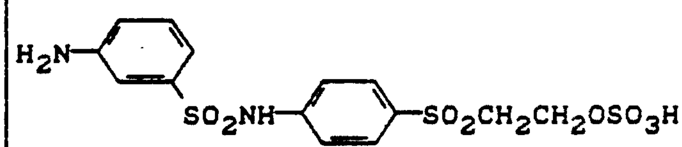 |
| 38 | azo 4 | F | " |
| 39 | azo 5 | Cl | 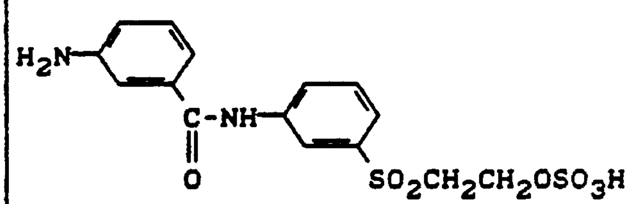 |
| 40 | azo 5 | F | " |

| Beispiel | Aminofarbstoff | Halogen am Triazin | Aminkomponente |
|---|---|---|---|
| 41 | azo 5 | Cl | 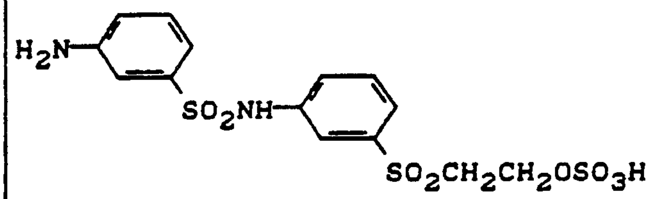 |
| 42 | azo 5 | F | ″ |
| 43 | azo 6 | Cl | 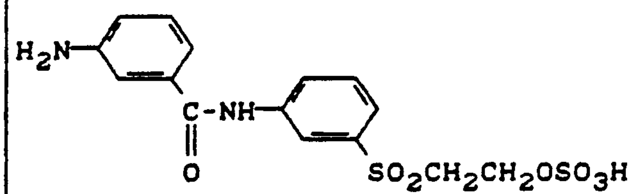 |
| 44 | azo 6 | F | ″ |
| 45 | azo 7 | Cl | ″ |
| 46 | azo 7 | F | ″ |
| 47 | azo 8 | Cl | ″ |
| 48 | azo 8 | F | ″ |
| 49 | azo 9 | Cl | ″ |
| 50 | azo 9 | F | ″ |

## Ansprüche

1. Reaktivfarbstoffe der allgemeinen Formel (1)

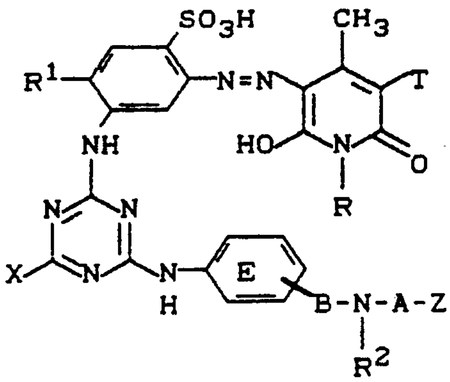

(1)

worin
X = Cl oder F, gegebenenfalls substituierter Pyridinium-Rest (Substituenten insbesondere gegebenenfalls substituiertes $C_1$-$C_4$-Alkyl, COOH, $SO_3H$, CN, Carbonamid),
R = H oder gegebenenfalls substituiertes $C_1$-$C_4$-Alkyl,
$R^1$ = H, COOH, $SO_3H$, oder $CH_3$
$R^2$ = H oder gegebenenfalls substituiertes $C_1$-$C_4$-Alkyl,
B = Brückenglied, insbesondere CO, $SO_2$ oder NHCO,
A = gegebenenfalls substituiertes Phenylen- oder Naphthylen,
Z = $SO_2CH=CH_2$ oder $SO_2CH_2CH_2$-Y, wobei Y eine unter alkalischen Bedingungen abspaltbare Gruppe bedeutet und der Benzolring E substituiert sein kann,
T = H, $SO_3H$, $CH_2SO_3H$, $CONH_2$, Cl.

2. Farbstoffe des Anspruchs 1 der Formel

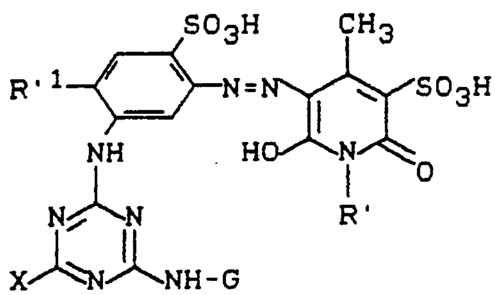

(2)

worin $R'$ = $CH_3$ oder $C_2H_5$ und $R''$ = H oder $SO_3H$

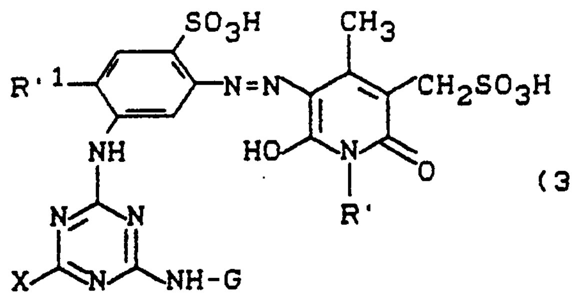

(3)

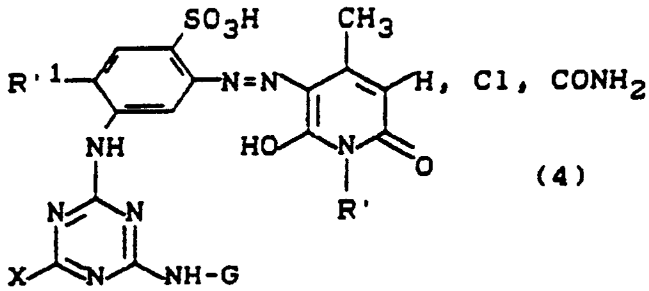

(4)

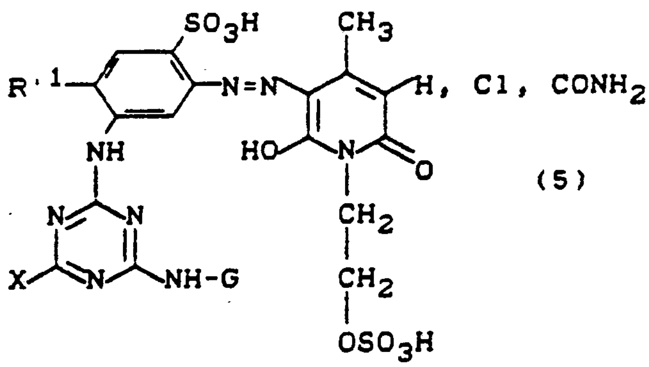

(5)

worin G für

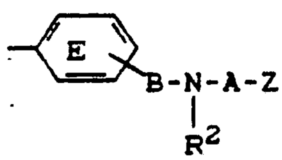

steht.

3. Farbstoffe des Anspruchs 2 mit
$R'^{1}$ = H
X = Cl
G = G′, worin G′ für

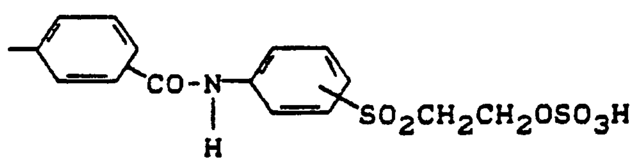

steht.

Europäisches Patentamt

# EUROPÄISCHER RECHERCHENBERICHT

Nummer der Anmeldung

EP 90 10 8777

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 267 524 (SUMITOMO)<br>* Anspruch 1; Beispiel 26 *<br>----- | 1-3 | C 09 B 62/085<br>C 09 B 62/51 |

RECHERCHIERTE SACHGEBIETE (Int. Cl.5)

C 09 B

Der vorliegende Recherchenbericht wurde für alle Patentansprüche erstellt

| Recherchenort | Abschlußdatum der Recherche | Prüfer |
|---|---|---|
| DEN HAAG | 30-07-1990 | GINESTET M.E.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)